# EUROPÄISCHE PATENTSCHRIFT

(11) **EP 0 846 584 B1**
(45) Veröffentlichungstag und Bekanntmachung des Hinweises auf die Patenterteilung: **05.09.2001**
(21) Anmeldenummer: 97119109.3
(22) Anmeldetag: 03.11.1997
(51) Int. Cl.: B60J 7/20

(54) **Verdeckkastendeckel für ein Kraftfahrzeug**
Lid for soft top storage compartment
Couvercle pour compartiment de rangement de toit souple de véhicule.

(30) Priorität: 05.12.1996 DE 19650402
(43) Veröffentlichungstag der Anmeldung: 10.06.1998
(73) Patentinhaber: Dr.Ing.h.c. F. Porsche Aktiengesellschaft, 70435 Stuttgart (DE)
(72) Erfinder: Beierl, Dominik, 70825 Korntal-Münchingen (DE); Henn, Uwe, 89537 Giengen (DE)

(56) Entgegenhaltungen:
- DE-B- 2 327 487
- DE-C- 19 525 587
- GB-A- 2 300 671

## Beschreibung

Die Erfindung betrifft einen Verdeckkastendeckel für ein Kraftfahrzeug gemäß dem Oberbegriff des Patentanspruchs 1.

Aus dem Artikel "Der neue Mercedes-Benz Roadster" - Karosserie: Klimatisierung, Verdeck und Schließung" von G. Huber, W. Volz, H. Möller und K. Claar in ATZ Automobiltechnische Zeitschrift 91(1989)6, Seiten 309 bis 318 geht ein elektrohydraulisch angetriebenes Verdeck für einen Personenkraftwagen hervor, das sich im abgeklappten Zustand in einem durch einen Verdeckkastendeckel abgedeckten heckseitigen Aufnahmeraum befindet.

Aus der GB-A-2 300 671 ist eine Antriebsanordnung zum Bewegen eines verriegelbaren Fahrzeugteils, in diesem Fall eines Deckels, bekannt, der im Gegensatz zum Anmeldegegenstand zweiteilig ausgebildet ist und aus einem Heckdeckel und einem Tragrahmen besteht. Dieser Heckdeckel weist als Verriegelungsvorrichtung Schnappverschlüsse auf und wird über einen Hydraulikzylinder geschwenkt.

Der Verdeckkastendeckel ist mittels einer Antriebseinrichtung von einer Schließstellung in eine hochgeschwenkte Offenstellung bewegbar und umgekehrt. Die Antriebseinrichtung umfaßt auf jeder Längsseite des Verdecks einen Hydraulikzylinder, der an einem Ausstellhebel des Verdeckkastendeckels eingreift.

Zur Festlegung des Verdeckkastendeckels in der Schließstellung ist zumindest eine lösbare Verriegelungsvorrichtung zwischen Aufbau und Verdeckkastendeckel vorgesehen, die durch einen weiteren Hydraulikzylinder angesteuert wird. Bei dieser Verdecksteuerung sind die einzelnen Bewegungsabläufe des Verdecks und des Verdeckkastendeckels einer elektrischen Folgesteuerung zugeordnet, d.h. zuerst wird zumindest eine von einer ersten Antriebseinrichtung betätigte Verriegelungseinrichtung entriegelt, die Entriegelungsstellung über die Endstellung von Mikroschaltern abgefragt und erst nach positiver Abfrage erfolgt über eine zweite Antriebseinrichtung die Verstellbewegung des Verdeckkastendeckels, wobei die Endstellungen des Deckels über weitere Mikroschalter abfragbar sind.

Bei dieser Anordnung sind mehrere Antriebseinrichtungen und Mikroschalter zum Öffnen und Schließen sowie zum Ent- und Verriegeln des Verdeckkastendeckels erforderlich, wodurch ein hoher baulicher Aufwand entsteht und die beiden aufeinanderfolgenden Bewegungsabläufe relativ viel Zeit beanspruchen.

Aufgabe der Erfindung ist es, den baulichen Aufwand für die Verstellbewegung und für das Ent- bzw. Verriegeln des Verdeckkastendeckels zur verringern und den Zeitbedarf für die beiden Bewegungsabläufe zu reduzieren.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß mit einer Antriebseinrichtung zwei zeitlich hintereinandergeschaltete Bewegungsabläufe ausgeführt werden können, nämlich einerseits das Ent- bzw. Verriegeln des Verdeckkastendeckels und andererseits das Öffnen und Schließen des Verdeckkastendeckels. Dadurch wird der bauliche Aufwand verringert und der Zeitaufwand für beide Bewegungsabläufe reduziert.

Auf Mikroschalter zum Abfragen der Stellung des Verdeckkastendeckels nach dem Ver- bzw. Entriegeln kann somit verzichtet werden, wodurch die Fehlerquellen reduziert werden. Die Antriebseinheit für die Deckelbewegung und die Verriegelung benötigt einen geringen Bauraum, weist einen einfachen Aufbau auf und kann als vormontierte prüfbare Baueinheit ausgebildet werden.

Durch die zwischengeschaltete mechanische Einrichtung zwischen der Antriebseinrichtung für den Verdeckkastendeckel und der zumindest einen Verriegelungsvorrichtung wird erreicht, daß keine Fehlbedienung des Verdeckkastendeckels erfolgen kann, sondern sich stets ein Bewegungsablauf an den vorhergehenden Bewegungsablauf anschließt, jedoch ohne vorhergehende Abfrage über Mikroschalter.

Ein Ausführungsbeispiel der Erfindung ist in der Zeichnung dargestellt und wird im folgenden näher erläutert.

Es zeigen
- Fig. 1: eine perspektivische Teilansicht von schräg vorne auf ein Fahrzeug mit einem Verdeck in Schließstellung und einem Verdeckkastendeckel,
- Fig. 2: eine Teilseitenansicht auf das Fahrzeug, wobei das Verdeck eine heckseitige Ablagestellung einnimmt,
- Fig. 3: eine perspektivische Ansicht von schräg vorne auf den Verdeckkastendeckel und die Antriebseinrichtung zum Öffnen und Schließen sowie zum Verriegeln und Entriegein des Verdeckkastendeckels,
- Fig. 4: eine Ansicht in. Pfeilrichtung R auf eine Scharniereinheit und Teile der Antriebseinrichtung in Schließstellung des Verdeckkastendeckels,
- Fig. 5: eine Ansicht von innen auf die Schamiereinheit und Teile der Antriebseinrichtung in Schließstellung des Verdeckkastendeckels,
- Fig. 6: eine Ansicht entsprechend Fig. 4, jedoch in Offenstellung des Verdeckkastendeckels,
- Fig. 7: eine Ansicht entsprechend Fig. 5, jedoch in Offenstellung des Verdeckkastendeckels,
- Fig. 8: einen Schnitt nach der Linie VIII-VIII der Fig. 4 in größerer Darstellung,
- Fig. 9: einen Schnitt nach der Linie IX-IX der Fig. 5 in größerer Darstellung,
- Fig. 10: eine Prinzipdarstellung von der Seite auf die Verstelleinrichtung und die seitliche Verriegelungsvorrichtung bei geschlossenem und verriegeltem Verdeckkastendeckel,
- Fig. 11: eine Prinzipdarstellung von der Seite auf Verstelleinrichtung und die seitliche Verriegelungsvorrichtung bei geschlossenem, jedoch entriegeltem Verdeckkastendeckel,
- Fig. 12: eine Prinzipdarstellung von der Seite auf die Verstelleinrichtung und die seitliche Verriegelungsvorrichtung bei geöffnetem Verdeckkastendeckel,
- Fig. 13: eine Ansicht in Pfeilrichtung S, teilweise im Schnitt auf den Zahnstangenantrieb und die damit zusammenwirkende hintere Verriegelungsvorrichtung samt der Regelsteuermechanik,
- Fig. 14: eine Ansicht in Pfeilrichtung T der Fig. 10, teilweise im Schnitt und in größerer Darstellung,
- Fig. 15: ein Detail X der Fig. 3 in größerer Darstellung und
- Fig. 16: ein Detail Y der Fig. 3 in größerer Darstellung und aufgeklappt.

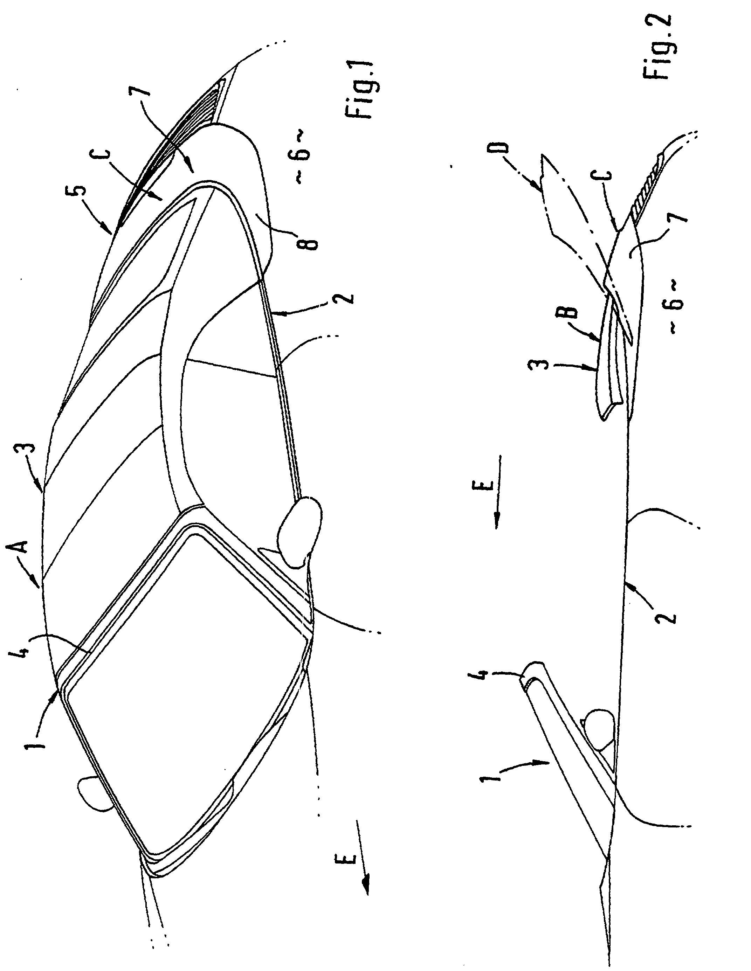

Fig. 1 zeigt einen Teilbereich eines Personenkraftwagens 1, der oberhalb einer Gürtellinie 2 ein Verdeck 3 aufweist. Im Ausführungsbeispiel wird das Verdeck 3 durch ein Faltverdeck gebildet, das sich in herkömmlicher Weise aus einem klappbaren Verdeckgestänge und einem an diesem befestigten faltbaren Verdeckbezug zusammensetzt. Das Verdeck 3 könnte jedoch auch aus starren, gelenkig miteinander verbundenen Teilen zusammengesetzt sein.

Gemäß Fig. 1 erstreckt sich das Verdeck 3 in der Schließstellung A zwischen einem Windschutzscheibenrahmen 4 und einem Heckbereich 5 und ist über wenigstens einen nicht näher gezeigten Verschluß am Windschutzscheibenrahmen 4 lösbar in Lage gehalten. In der zurückgeklappten Ablagestellung B befindet sich das Verdeck 3 versenkt in einem heckseitigen Aufnahmeraum 6, der nach oben hin zumindest abschnittsweise durch einen Verdeckkastendeckel 7 abgedeckt ist (Fig. 2). Der zur Unterbringung des abgelegten Verdecks 3 vorgesehene Aufnahmeraum 6 wird im Ausführungsbeispiel durch einen Verdeckkasten gebildet.

Der in der Draufsicht gesehen etwa U-förmig gestaltete Verdeckkastendeckel 7 ist an seinen beiden seitlich außenliegend angeordneten, längsgerichteten Schenkeln 8 unter Vermittlung von je einer Scharniereinheit 9 gelenkig mit dem angrenzenden feststehenden Aufbau verbunden und von einer geschlossenen Stellung C in eine Offenstellung D verlagerbar und umgekehrt. Jede ein vorgefertigtes Bauteil bildende Scharniereinheit 9 umfaßt eine an der Unterseite des Verdeckkastendeckels 7 lösbar befestigte langgestreckte Konsole 10, einen am feststehenden Aufbau in Lage gehaltenen Lagerbock 11 sowie zwei beabstandet angeordnete Ausstellhebel 12, 13. Die beiden Ausstellhebel 12, 13 bilden zusammen mit der Konsole 10 und dem Lagerbock 11 eine Viergelenkanordnung (Parallelogramm), wobei die oberen Enden der beiden Ausstellhebel 12, 13 drehbar an die Konsole 10 und die unteren Enden drehbar an den Lagerbock 11 angeschlossen sind.

Der in Fahrtrichtung E gesehen vordere Aussteilnebel 12 ist mit einem nach unten gerichteten Steg 14 der Konsole 10 und mit einem Lagerauge 15 des Lagerbocks 11 über nicht näher dargestellte querverlaufende, etwa horizontal ausgerichtete Gelenkbolzen verbunden.

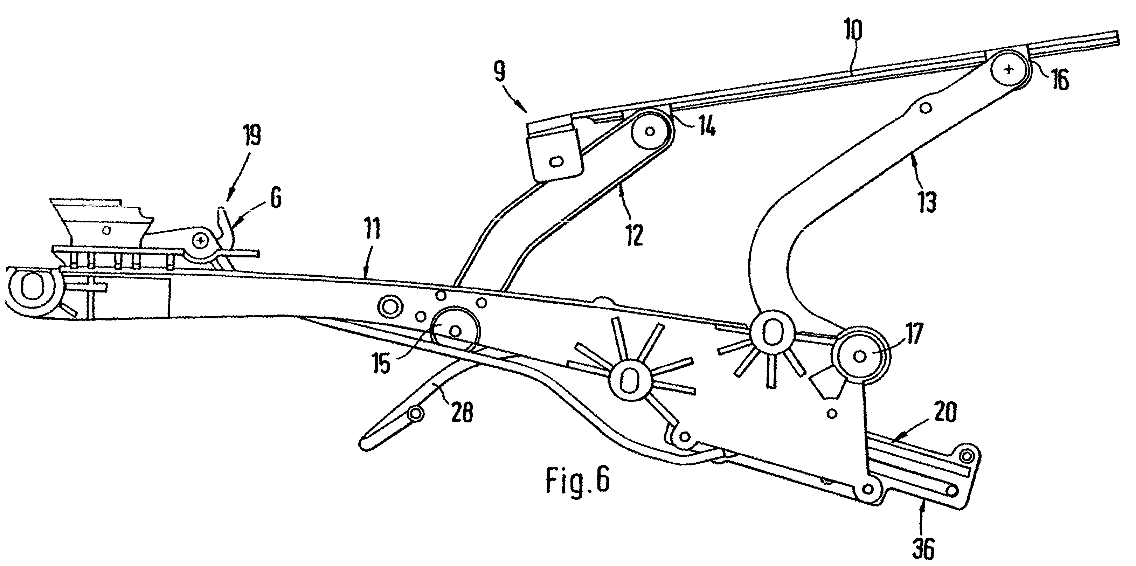

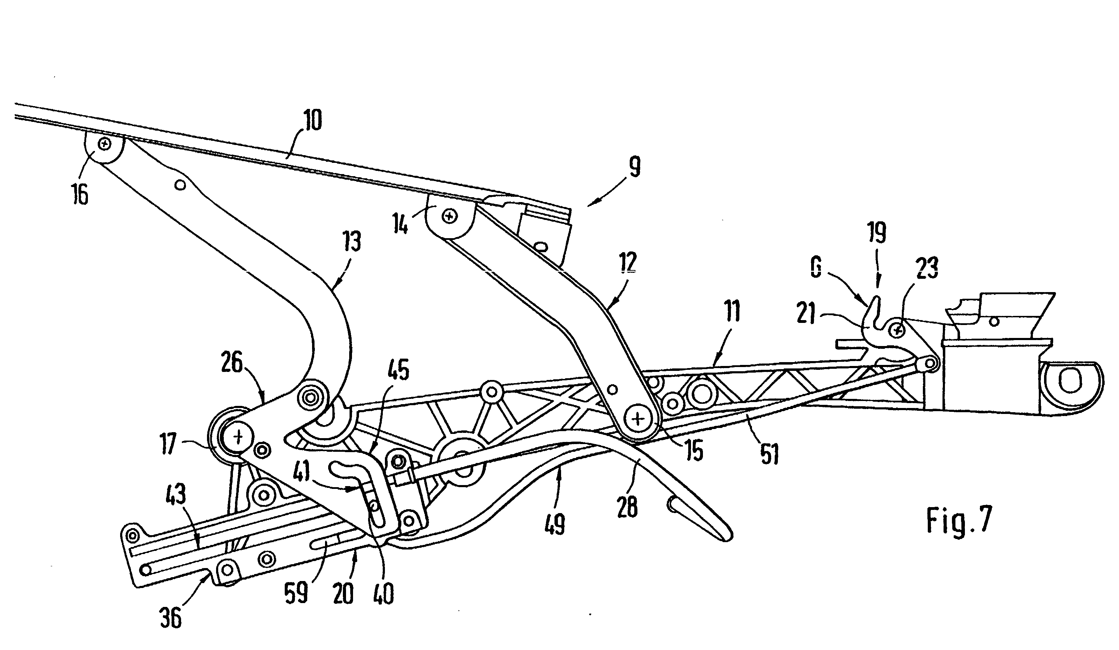

Der hintere Ausstellhebel 13 ist mit einer nach unten gebogenen Abstellung 16 der Konsole 10 und einem weiteren Lagerauge 17 über nicht gezeigte querverlaufende, etwa horizontal ausgerichtete Gelenkbolzen drehbar verbunden. Zwischen den beiden Anlenkpunkten weist der Ausstellhebel 13 abschnittsweise einen gebogenen nach unten gerichteten Formverlauf auf (Fig. 6 und 7).

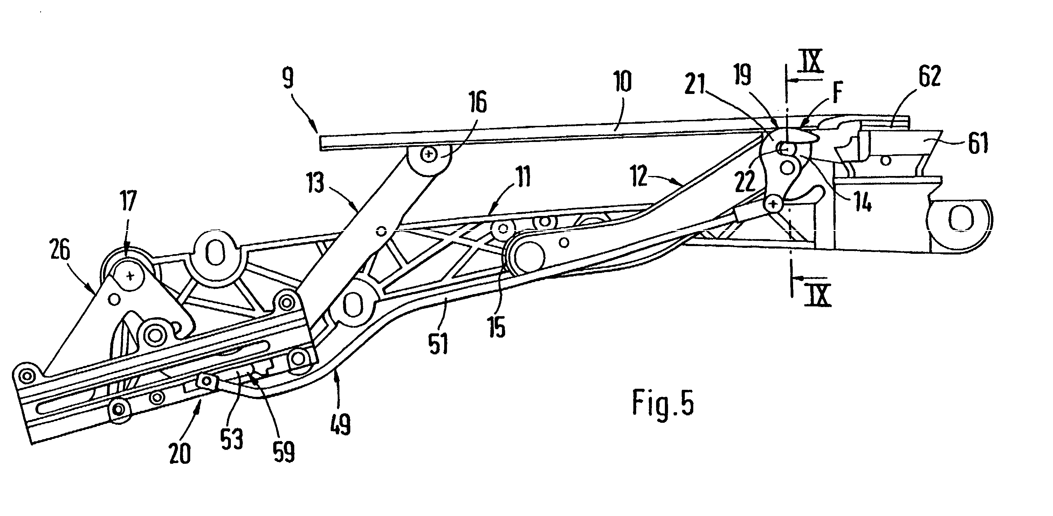

Der Lagerbock 11 wird durch ein langgestrecktes Gußteil gebildet, das über mehrere schraubbare Befestigungselemente am angrenzenden, nicht näher gezeigten, seitlichen Aufbau in Lage gehalten ist und die Steifigkeit des Aufbaus zusätzlich erhöht. Das vorzugsweise aus einer Leichtmetallegierung gefertigte Gußteil weist eine Vielzahl von fachwerkartig angeordneten Versteifungsrippen auf (Fig. 5 und 7).

Der Verdeckkastendeckel 7 ist mittels einer motorischen Antriebseinrichtung 18 von seiner Schließstellung C über Zwischenstellungen in eine hochgeschwenkte Offenstellung D verlagerbar und umgekehrt. In der Schließstellung C ist der Verdeckkastendeckel 7 über zumindest eine lösbare Verriegelungsvorrichtung 19, 19' am feststehenden Aufbau fixiert.

Erfindungsgemäß ist vorgesehen, daß die Antriebseinrichtung 18 zur Verstellbewegung des Verdeckkastendeckels 7 (Öffnen - Schließen) über eine mechanische Einrichtung 20 mit der zumindest einen Verriegelungsvorrichtung 19, 19' in Wirkverbindung steht und somit auch zum Verriegeln bzw. Entriegeln des Verdeckkastendeckels 7 herangezogen wird.

Zur Halterung des Verdeckkastendeckels 7 in der Schließstellung C sind im Ausführungsbeispiel mehrere Verriegelungsvorrichtungen 19, 19' vorgesehen, nämlich in einem vorderen Bereich von beiden längsgerichteten Schenkeln 8 des Verdeckkastendeckels 7 und in einem hinteren querverlaufenden Bereich des Verdeckkastendeckels 7. Die beiden vorderen, seitlich außenliegenden Verriegelungsvorrichtungen sind mit 19 bezeichnet, wogegen der hinteren Verriegelungsvorrichtung das Bezugszeichen 19' zugeordnet ist.

Jede Verriegelungseinrichtung 19, 19' umfaßt einen als Winkelhebel ausgebildeten schwenkbaren Verriegelungshaken 21, 21', der von einer Verriegelungsstellung F, F' in eine Fregabestellung G verlagerbar ist und umgekehrt. In der Verriegelungsstellung F, F' wirkt der Verriegelungshaken 21, 21' mit einem Verriegelungsbolzen 22 bzw. einem Haltebügel 22' zusammen. Der Verriegelungshaken 21, 21' ist um eine Drehachse 23, 23' schwenkbar gelagert.

Mittels der mechanischen Einrichtung 20 werden beim motorischen Öffnen und Schließem des Verdecks 3 jeweils zuerst die Verriegelungsvorrichtungen 19, 19' für den Verdeckkastendeckel 7 von der Verriegelungsstellung F, F' in die Freigabestellung G verschwenkt und anschließend wird der Verdeckkastendeckel 7 von der Schließstellung C in die hochgeschwenkte Offenstellung D bewegt.

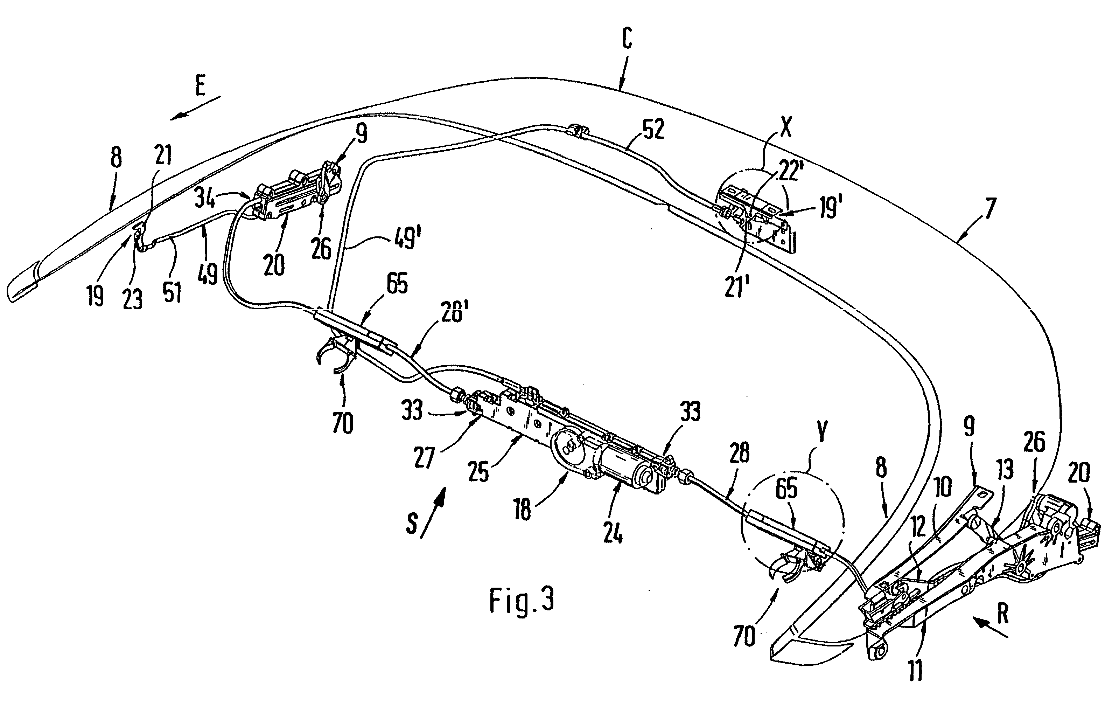

Die Antriebseinrichtung 18 für den Verdeckkastendeckel 7 umfaßt einen aufbauseitig angebrachten Getriebemotor 24, der über Übertragungselemente 25 mit wenigstens einer Verstelleinrichtung 26 für den Verdeckkastendeckel 7 zuammenwirkt. Gemäß Fig. 3 sind an beiden Längsseiten des Verdeckkastendeckels 7 Verstelleinrichtungen 26 vorgesehen.

Die Übertragungselemente 25 umfassen einen mit dem Getriebemotor 24 zusammenwirkenden Zahnstangenantrieb 27 und zwei in starren Führungsrohren 28, 28' geführte Antriebskabel 29, 29', wobei jedes Antriebskabel 29, 29' eine in Querrichtung bewegbare Zahnstange 30, 30' des Zahnstangenantriebs 27 mit der seitlich außenliegend angeordneten Verstelleinrichtung 26 kraftübertragend verbindet.

Der Zahnstangenantrieb 27 setzt sich aus einem sich in Fahrzeugquerrichtung erstreckenden Gehäuse 31, einem im Gehäuse 31 drehbar gelagerten Antriebsritzel 32 und zwei mit dem Antriebsritzel 32 kämmenden Zahnstangen 30, 30' zusammen, wobei die ebenfalls in Querrichtung ausgerichteten Zahnstangen 30, 30' oberhalb und unterhalb des Antriebsritzels 32 angeordnet und verschiebbar im Gehäuse 31 gelagert sind. Das Antriebsritzel 32 ist kraftübertragend auf eine Antriebswelle des Getriebemotors 24 aufgesteckt (nicht näher dargestellt).

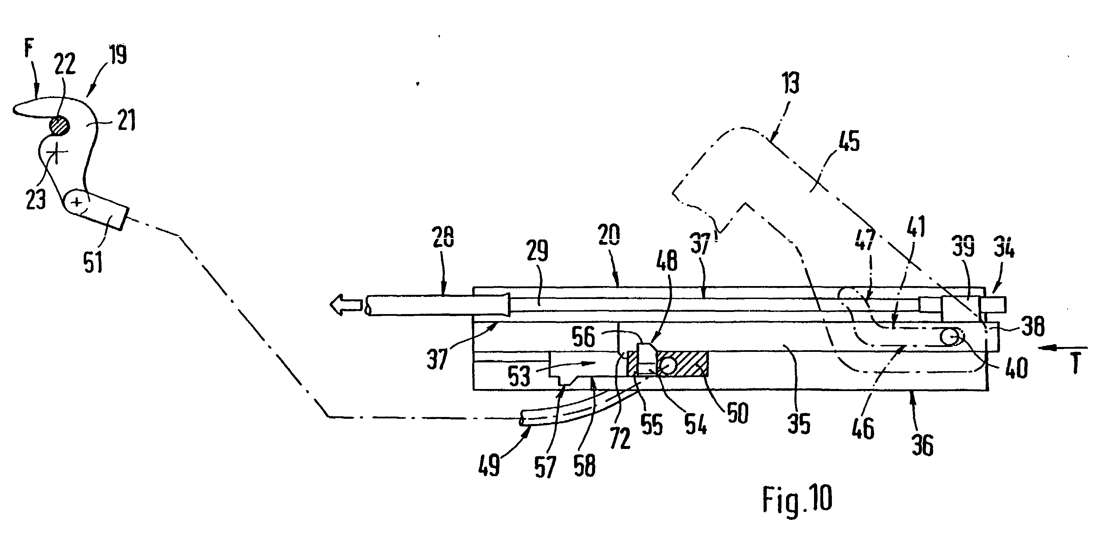

Ein Ende 33 jedes Antriebskabels 29, 29' ist fest mit dem angrenzenden Endbereich der Zahnstange 30, 30' verbunden, wogegen das andere Ende 34 jedes Antriebskabels 29, 29' mit einem längsbeweglichen Mitnehmer 35 der Verstelleinrichtung 26 fest verbunden ist. Jede Verstelleinrichtung 26 für den Verdeckkastendeckel 7 umfaßt ein am Lagerbock 11 der Scharniereinheit 9 befestigtes langgestrecktes zweiteiliges Gehäuse 36, das in Fahrzeuglängsrichtung ausgerichtet ist, wobei in Längsführungen 37, 37' des Gehäuses 36 der verschiebbar gelagerte Mitnehmer 35 aufgenommen ist. Der Mitnehmer 35 umfaßt einen langgestreckten, etwa viereckig (rechteckig) profilierten unteren Abschnitt 38, der korrespondierend mit der Längsführung 37 ausgebildet sowie einen an der Oberseite angeformten schlüssellochartig profilierten oberen Abschnitt 39, der in der darüberliegenden Längsführung 37' aufgenommen ist. Der kurze obere Abschnitt 39 ist mit dem Ende 34 des Antriebskabels 29, 29' fest verbunden (Fig. 10).

Die beiden übereinanderliegenden Längsführungen 37, 37' sind über einen aufrechten Schlitz aneinander angeschlossen. Der obere Abschnitt 39 ist an einem hinteren Endbereich des langgestreckten unteren Abschnitts 38 vorgesehen.

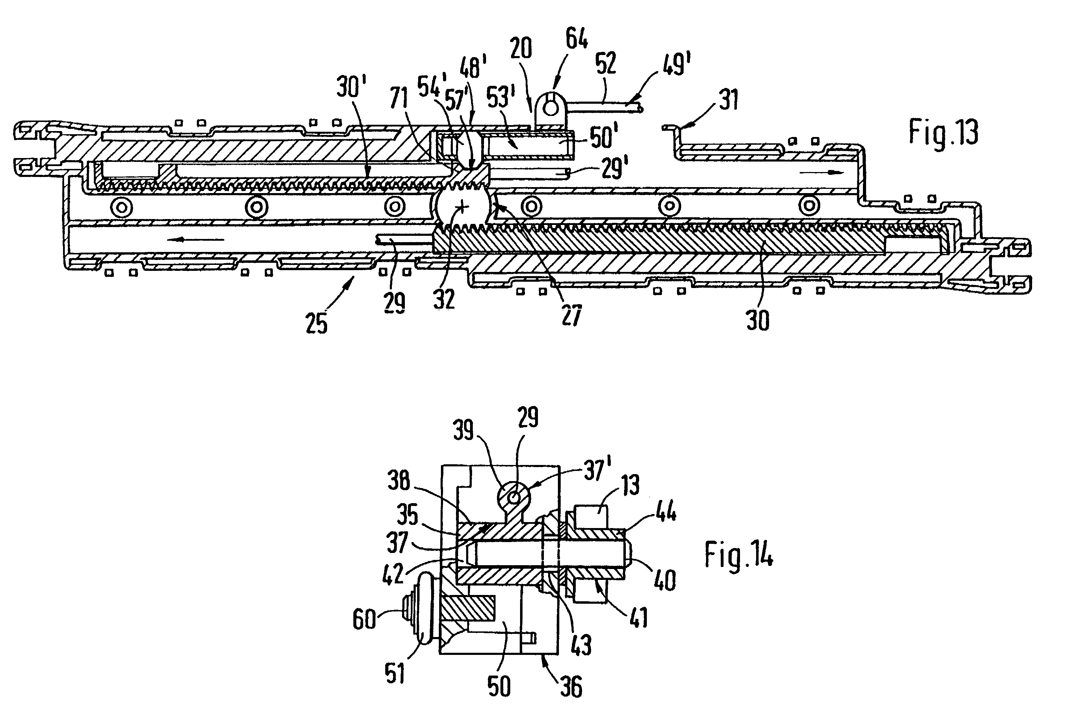

Ein seitlich abgestellter Kulissenzapfen 40 des Mitnehmers 35 steht mit einer am Ausstellhebel 13 der Schamiereinheit 9 ausgebildeten Kulissenführung 41 in Wirkverbindung. Der sich in Fahrzeugquerrichtung erstreckende Kulissenzapfen 40 ist in eine korrespondierende Bohrung 42 des Mitnehmers 35 eingesteckt, durchdringt eine längliche Schlitzöffnung 43 des Gehäuses 36 und ist durch die am Ausstellhebel 13 ausgebildete Kulissenführung 41 hindurchgeführt (Fig. 14).

Gemäß Fig. 14 kann auf den vorstehenden, mit der Kulissenführung 41 zusammenwirkenden Bereich des zylindrischen Kulissenzapfens 40 eine Hülse 44 aufgesetzt sein. Die Kulissenführung 41 ist an einer Anformung 45 des hinteren Ausstellhebels 13 vorgesehen und setzt sich aus zwei stumpfwinkelig aneinandergesetzten Bahnabschnitten 46, 47 zusammen. Der hintere Ausstellhebel 13 kann ein- oder mehrteilig ausgebildet sein. Die Bahnabschnitte 46, 47 sind dem Durchmesser des Kulissenzapfens 40 angepaßt, dergestalt, daß eine Verschiebebewegung des Kulissenzapfens 40 innerhalb der Kulissenführung gewährleistet ist.

Im Ausführungsbeispiel ist der erste Bahnabschnitt 46 geradlinig ausgebildet, wogegen der zweite Bahnabschnitt 47 einen kreisbogenförmigen Verlauf aufweist. Bei geschlossenem Verdeckkastendeckel 7 fluchtet der erste Bahnabschnitt 46 mit dem langgestreckten Mitnehmer 35 (Fig. 10). Die mechanische Einrichtung 20 zwischen der Antriebseinrichtung 18 und der Verriegelungsvorrichtung 19, 19' wird durch eine Riegelsteinmechanik 48, 48' und ein Verbindungselement 49, 49' gebildet, wobei das Verbindungselement 49, 49' mit seinem einen Ende mit dem schwenkbar gelagerten Verriegelungshaken 21, 21' und mit seinem anderen Ende mit einem Schlitten 50, 50' der Riegelsteinmechanik 48, 48' verbunden ist. Das Verbindungselement 49 wird für die beiden vorderen seitlichen Verriegelungsvorrichtungen 19 durch eine Schubstange 51 gebildet, für die hintere Verriegelungsvorrichtung 19' durch einen Bowdenzug 52.

Die Riegelsteinmechanik 48 für die beiden seitlichen Verriegelungsvorrichtungen 19 umfaßt einen unterhalb des Mitnehmers 35 angeordneten Schlitten 50, der in einer eine geringe Längserstreckung aufweisenden Längsführung 53 des Gehäuses 36 gleitend gelagert ist sowie einen in Höhenrichtung verschiebbaren Riegelstein 54, der in eine aufrechte Durchgangsöffnung 55 des Schlittens 50 eingesetzt ist. Der in der Draufsicht gesehen viereckig ausgebildete Riegelstein 54 überragt den Mitnehmer 35 in Höhenrichtung, wobei je nach Stellung des Mitnehmers 35 ein vorstehender Abschnitt des Riegelsteins 54 in eine erste Quernut 56 an der Unterseite des Mitnehmers 35 oder in eine zweite Quernut 57 am Boden 58 der Längsführung 53 eingreift. Die Längsführung 53 ist in einem vorderen Bereich des Gehäuses 36 angeordnet und unmittelbar an die darüberliegende Längsführung 37 angeschlossen. Die beiden Quernuten 56, 57 sind ebenso wie der obere und untere Rand des Riegelsteins 54 mit korrespondierenden Einführschrägen versehen.

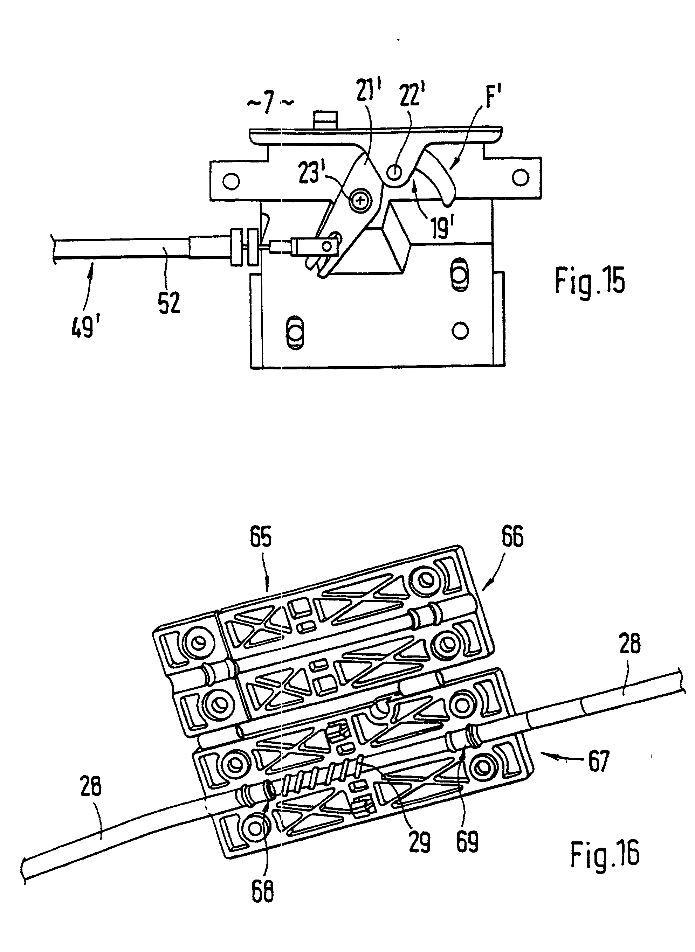

Der Schlitten 50 weist einen seitlich vorstehenden, durch einen Längsschlitz 59 des Gehäuses 36 hindurchragenden Mitnahmebolzen 60 auf, an den das dem Verriegelungshaken 21 abgekehrte Ende der Schubstange 51 gelenkig angeschlossen ist (Fig. 15). Der Kulissenzapfen 40 und der Mitnahmebolzen 60 sind an gegenüberliegenden Seiten des Gehäuses 36 angeordnet.

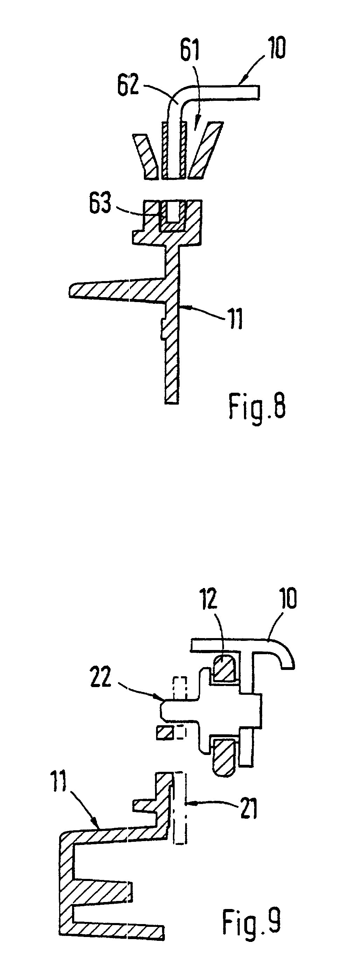

Zur Fixierung des geschlossenen Verdeckkastendeckels 7 in Fahrzeugquerrichtung ist am vorneliegenden Ende der Konsole 10 eine trichterförmige, nach oben hin offene Aufnahme 61 ausgebildet, in die ein nach unten ragender etwa vertikaler Arm 62 der Konsole 10 formschlüssig eingreift. Zur Vermeidung von Klappergeräuschen ist der Arm 62 abschnittsweise mit einer Umhüllung 63 aus Kunststoff oder Gummi versehen (Fig. 8).

Die Verriegelungsbolzen 22 für die seitlichen Verriegelungsvorrichtungen 19 sind gemäß Fig. 9 einstückig mit den oberen Gelenkbolzen für den Ausstellhebel 12 ausgebildet und erstrecken sich mit ihren freien Enden zur Fahrzeugaußenseite hin.

Die Riegelsteinmechanik 48' für die hintere Verriegelungsvorrichtung 19' ist vom Prinzip her ähnlich aufgebaut wie die Regelsteinmechanik 48 für die seitliche Verriegelungsvorrichtung 19 mit dem Unterschied, daß der Schlitten 50' und der Riegelstein 54' bei der Regelsteinmechnaik 48' mit der darunterliegenden Zahnstange 30' zusammenwirken und ein nach oben vortehender Aufnahmeabschnitt 64 des Schlittens 50' mit dem einen Ende des Bowdenzuges 52 verbunden ist (Fig. 13). Die Quernut 57' ist bei dieser Anordnung an einer nach oben gerichteten Anformung 71 der Zahnstange 30' vorgesehen.

Die Führungsrohre 28, 28' für die beiden seitlich außenliegenden Verriegelungsvorrichtungen 19 sind aus Montagegründen zur Schaffung einer Biegestelle jeweils zweiteilig ausgebildet, wobei die Verbindung über eine langgestreckte Verbindungsmuffe 65 erfolgt (Fig. 3 und 16). Die Verbindungsmuffe 65 umfaßt zwei über Scharniere miteinander verbundene Hälften 66, 67, die jeweils Endbereiche 68, 69 der Führungsrohre 28 aufnehmen.

in Fig. 16 ist die aufgeklappte Stellung der beiden Hälften 66, 67 dargestellt. Zwischen den Endbereichen 68, 69 erstreckt sich nur das innenliegende flexible Antriebskabel 29. Nach dem Einlegen der Führungsrohre 28 in eine Hälfte der Verbindungsmuffe 65 werden beide Hälften 66, 67 zusammengeklappt und durch eine Clips- bzw. Schraubverbindung miteinander verbunden. Die Verbindungsmuffen 65 sind über Halter 70 an einem angrenzenden, nicht näher gezeigten Hilfsrahmen in Lage gehalten.

Das freie Ende der nicht näher dargestellten Abtriebswelle ist mit einem Innensechskant versehen, wodurch eine manuelle Notbetätigung der Antriebseinrichtung 18 geschaffen wird.

Ferner ist auf die Abtriebswelle ein Potentiometer aufgesteckt, der sich mit der Abtriebswelle mitdreht. Durch das Potentiometer läßt sich die Position feststellen, in der sich die Zahnstangen 30, 30' befinden (nicht näher dargestellt).

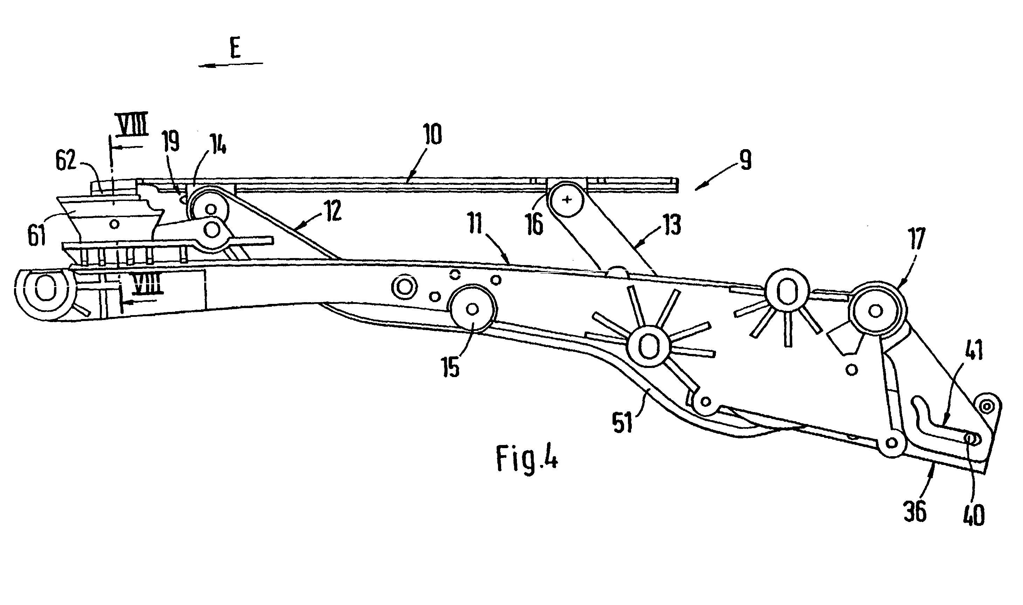

Bei geschlossenem und verriegeltem Verdeckkastendeckel 7 (siehe Fig. 10) nehmen die beiden Ausstellhebel 12, 13 die in den Figuren 4, 5 und 10 dargestellte Lage ein. Der mit dem Mitnehmer 35 verbundene Kulissenzapfen 40 befindet sich benachbart eines hinteren Randes des geradlinigen Bahnabschnitts 46 der Kulissenführung 41 und der Riegelstein 54 greift in die Quernut 56 des darüberliegenden Mitnehmers 35 ein.

Der Schlitten 50 befindet sich am hinteren Ende der Längsführung 53. Die Verriegelungshaken 21, 21' umgreifen die Verriegelungsbolzen 22, 22' und der Mitnahmebolzen 60 für die Schubstange 51 befindet sich am hinteren Rand des Längsschlitzes 59. Das gleiche Prinzip gilt für die hintere Verriegelungsvorrichtung 19' (siehe Fig. 13).

Zum Öffnen der Verriegelungshaken 21, 21' wird mittels eines im Fahrgastraum vorgesehenen Schalters der Getriebemotor 24 in Gang gesetzt und über das Antriebsritzel 32 werden beide Zahnstangen 30, 30' und die mit ihnen verbundenen Antriebskabel 29, 29' über die starre Verbindung nach außen bewegt.

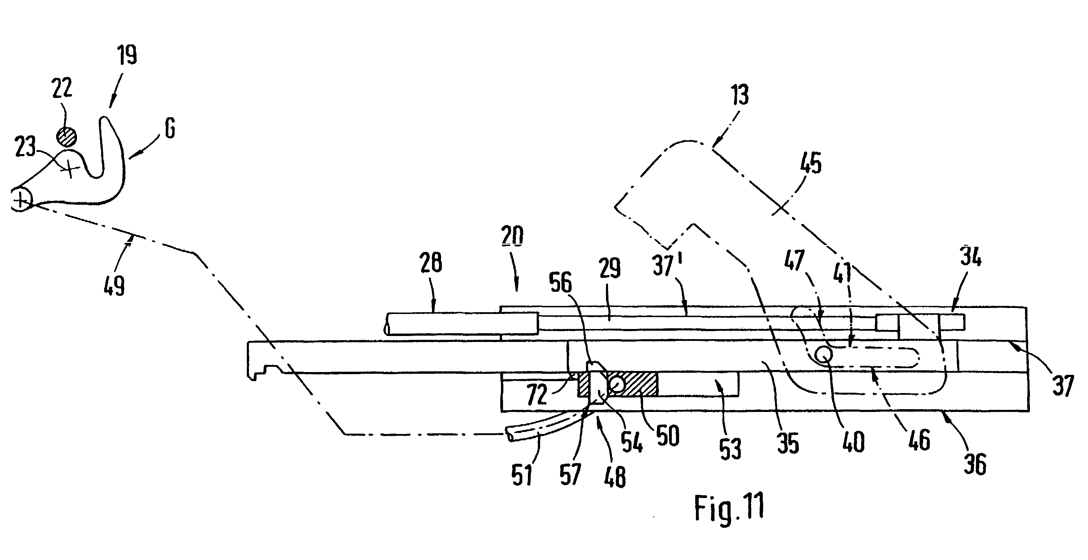

Der Mitnehmer 35 bewegt sich im Gehäuse 36 durch den Zug im Antriebskabel 29, 29'um ca. 25mm nach vorne, wodurch der Schlitten 50 den gleichen Weg zurücklegt und der Riegelstein 54 durch sein Gewicht nach unten in die Quernut 57 der Längsführung 53 fällt (siehe Fig. 11). In dieser Stellung erfolgt ein Entkoppelung zwischen Mitnehmer 35 und dem darunterliegenden Schlitten 50. Der Schlitten 50' bewegt sich von der in Fig. 13 dargestellten Endstellung durch die Bewegung der Zahnstange 30 in seine andere Endstellung in der der Riegelstein 54' aus der Quernut 57' nach oben geschoben wird.

Durch die Längsbewegung der Schlitten 50, 50' in den Längsführungen 53, 53' werden über die Schubstangen 51 und den Bowdenzug 52 die Verriegelungshaken 21, 21' von der Verriegelungsstellung F in die Entriegelungsstellung G verschwenkt; der Verdeckkastendeckel 7 kann nunmehr geöffnet werden.

Die beiden Ausstellhebel 12, 13 jeder Schamiereinheit 9 nehmen während dieses Vorgangs ihre Stellung gemäß den Flg. 4 und 5 ein. Beim Entriegeln der Verriegelungshaken 21, 21' wandert der Mitnahmebolzen 60 zum vorderen Rad des gehäuseseitigen Längsschlitzes 59 und der Kulissenzapfen 41 nach vorne etwa bis zum Übergangsbereich der beiden Bahnabschnitte 46, 47 (Fig. 11).

Beim nachfolgenden Öffnen des Verdeckkastendeckels 7 bewegt sich durch fortwährenden Zug im Antriebskabel 29, 29' der Mitnehmer 35 in den Längsführungen 37, 37' im Gehäuse 36 nach vorne. Dabei wird zum einen der Schlitten 50 - und damit die Verriegelungshaken 21, 21' in ihrer Lage festgehalten -, zum anderen erfahren der hintere Ausstellhebel 13 und damit auch der vordere Ausstellhebel 12 eine Auslenkung entgegen dem Uhrzeigersinn. Aufgrund des Kulissenzapfens 40 am Mitnehmer 35 und der Kulissenführung 41 am hinteren Ausstellhebel 13 erfolgt eine Schwenkbewegung des Verdeckkastendeckels 7 in die Offenstellung D.

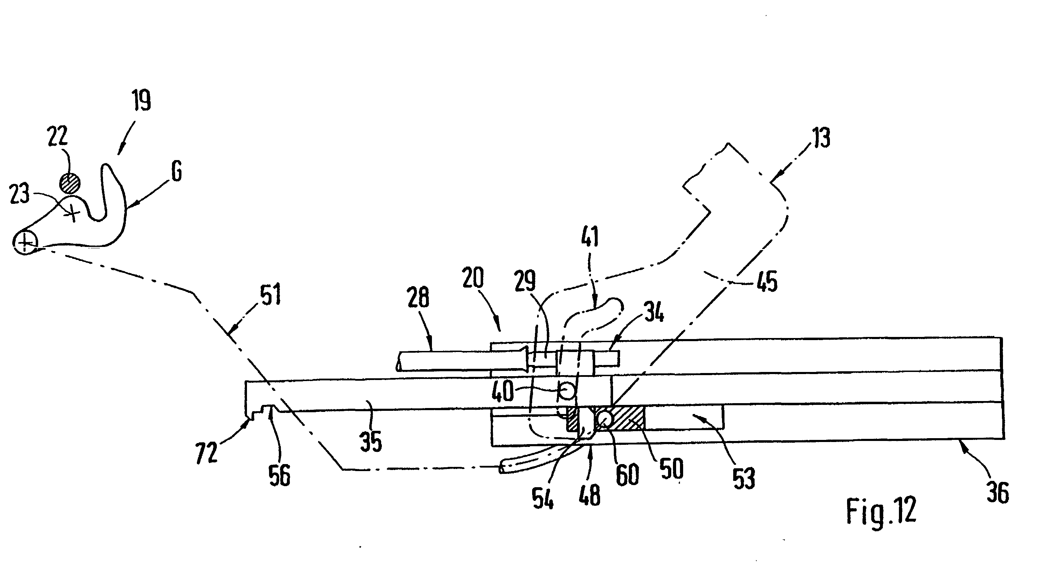

Die Stellung des Mitnehmers 35, des Kulissenzapfens 40, der Kulissenbahn 41 und des Ausstellhebels 13 in der Offenstellung D des Verdeckkastendeckels 7 sind in Fig. 12 dargestellt.

Beim Schließen des Verdeckkastendeckels 7 fährt der Mitnehmer 35 durch Druck im Antriebskabel 29, 29' im Gehäuse 36 wieder zurück, wodurch die Ausstellhebel 12, 13 von der Ausstellage gemäß den Fig. 6 und 7 in die Ruhelage gemäß den Fig. 4 und 5 zurückgeschwenkt werden und der Verdeckkastendeckel 7 dann wieder auf den Dichtungen aufliegt.

Beim Verriegeln des Verdeckkastendeckels 7 bewegt sich der Mitnehmer 35 die letzten 25mm erneut in die Ruhelage, wobei durch eine Raste 72 der untenliegende Schlitten 50 mitgenommen wird und sich der Riegelstein 54 von der unteren Quernut 57 in die obere Quernut 56 des Mitnehmers 35 hochbewegt (durch die Einführschrägen). Währenddessen hakt der Verriegelungshaken 21 wieder in den Verriegelungsbolzen 22 ein; der Verdeckkastendeckel 7 ist somit gegen Aufklappen gesichert. Dasselbe Prinzip gilt für den hinteren Verriegelungshaken 21' und den zugeordneten Verriegelungsbolzen 22'.

## Patentansprüche

1. Verdeckkastendeckel (7) eines Kraftfahrzeugs (1) für einen heckseitigen Aufnahmeraum (6) zur Unterbringung eines abgelegten Verdecks (3), wobei der Verdeckkastendeckel mittels einer Antriebseinrichtung (18) von einer Schließstellung (C) in eine hochgeschwenkte Offenstellung (D) bewegbar ist und umgekehrt und der Verdeckkastendeckel (7) in der Schließstellung (C) über zumindest eine lösbare Verriegelungsvorrichtung (19, 19') arn feststehenden Aufbau festgelegt wird und die Antriebseinrichtung (18) zur Verstellbewegung des Verdeckkastendeckels (7) aus einer mechanischen Einrichtung besteht, die zum Verriegeln bzw. Entriegeln des Verdeckkastendeckels (7) dient mit zumindest einer der Verriegelungsvorrichtung (19, 19') in Wirkverbindung steht, wobei zum Öffnen und Schließen des Verdecks (3) jeweils zuerst die Verriegelungsvorrichtungen (19, 19') des Verdeckkastendeckels (7) in eine Freigabestellung (G) verlagert werden und danach die Verstellbewegung des Verdeckkastendeckels (7) erfolgt, **dadurch gekennzeichnet, daß** die Antriebseinrichtung (18) einen aufbauseitig angeordneten Getriebemotor (24) umfaßt, der mittels Übertragungselemente (25) mit wenigstens einer Verstelleinrichtung (26) für den Verdeckkastendeckel (7) zusammenwirkt und die Übertragungselemente (25) durch einen mit dem Getriebemotor (24) verbundenen Zahnstangenantrieb (27) und zwei in Führungsrohren (28, 28') geführte Antriebskabel (29, 29') gebildet werden, wobei diese Antriebskabel (29, 29') Zahnstangen (30, 30') des Zahnstangenantriebs (27) mit den seitlich außenliegend angeordneten Verstelleinrichtungen (26) kraftübertragend verbinden und jede Verstellvorrichtung (26) ein an einem aufbauseitigen Lagerbock (11) einer Scharniereinheit (9) befestigtes Gehäuse (36) umfaßt und in dem Gehäuse (36) eine an der Unterseite des Verdeckkastendeckels (7) lösbar befestigte Konsole (10) und einen am feststehenden Aufbau in Lage gehaltenen Lagerbock (11) sowie zwei beabstandet angeordnete Ausstellhebel (12, 13) umfaßt, die zusammen mit der Konsole (10) und dem Lagerbock (11) eine Viergelenkanordnung bilden, wobei die oberen Enden der beiden Ausstellhebel (12, 13) drehbar an die Konsole (10) und die unteren Enden drehbar an den Lagerbock (11) angeschlossen sind.

2. Verdeckkastendeckel nach einem oder mehreren der vorangegangenen Ansprüche, **dadurch gekennzeichnet, daß** sich der Zahnstangenantrieb (27) aus einem sich in Fahrzeugquerrichtung erstreckenden Gehäuse (31), einem im Gehäuse (31) gelagerten Antriebsritzel (32) und zwei mit dem Antriebsritzel (32) zusammenwirkenden Zahnstangen (30, 30') zusammensetzt, wobei das Antriebsritzel (32) mit einer Abtriebswelle des Getriebemotors (24) kraftübertragend verbunden ist.

3. Verdeckkastendeckel nach einem oder mehreren der vorangegangenen Ansprüche, **dadurch gekennzeichnet, daß** die oberhalb bzw. unterhalb des Antriebsritzels (32) im Gehäuse (31) verschiebbar gelagerten Zahnstangen (30, 30') jeweils mit einem Ende (33) der in den Führungsrohren (28, 28') geführten Antriebskabel (29, 29') fest verbunden sind und daß die anderen Enden (34) der Antriebskabel (29, 29') jeweils mit einem längsbeweglichen Mitnehmer (35) der beiden seitlich außenliegend angeordneten Verstelleinrichtungen (26) fest verbunden sind.

4. Verdeckkastendeckel nach einem oder mehreren der vorangegangenen Ansprüche, **dadurch gekennzeichnet, daß** in dem Gehäuse (36) der verschiebbar gelagerte Mitnehmer (35) aufgenommen ist, wobei ein abgestellter Kulissenzapfen (40) des Mitnehmers (35) mit einer an einem Ausstellhebel (13) der Scharniereinheit (9) vorgesehenen Kulissenführung (41) in Wirkverbindung steht.

5. Verdeckkastendeckel nach Anspruch 4, **dadurch gekennzeichnet, daß** die Kulissenführung (41) an einer Anformung (45) des hinteren Ausstellhebels (13) vorgesehen ist und sich aus zwei winkelig aneinandergesetzten Bahnabschnitten (46, 47) zusammensetzt.

6. Verdeckkastendeckel nach Anspruch 1, **dadurch gekennzeichnet, daß** die mechanische Einrichtung (20) zwischen der Antriebseinrichtung (18) und der Verriegelungsvorrichtung (19, 19') durch eine Riegelsteinmechanik (48, 48') und ein Verbindungselement (49, 49') gebildet wird, wobei das Verbindungselement (49, 49') mit seinem einen Ende mit dem schwenkbar gelagerten Verriegelungshaken (21, 21') und mit seinem anderen Ende mit einem Schlitten (50, 50' der Riegelsteinmechanik (48, 48') verbunden ist.

7. Verdeckkastendeckel nach Anspruch 6, **dadurch gekennzeichnet, daß** das Verbindungselement (49) durch eine Schubstange (51) abgebildet wird.

8. Verdeckkastendeckel nach Anspruch 6, **dadurch gekennzeichnet, daß** das Verbindungselement (49') als Bowdenzug (52) ausgebildet ist

9. Verdeckkastendeckel nach Anspruch 6, **dadurch gekennzeichnet, daß** die Riegelsteinmechanik (48) einen unterhalb des Mitnehmers (35) angeordneten Schlitten (50) umfaßt, der in einer Längsführung (53) des Gehäuses (36) verschiebbar gelagert ist und daß in eine aufrechten Durchgangsöffnung des Schlittens (50) ein in Höhenrichtung verschiebbarer Riegelstein (54) eingesetzt ist, wobei je nach Stellung des Mitnehmers (35) ein vorstehender Abschnitt des Riegelsteins (54) in eine Quernut (56) an der Unterseite des Mitnehmers (35) oder in eine zweite Quernut (57) am Boden (58) der Längsführung (53) eingreift.

10. Verdeckkastendeckel nach einem oder mehreren der vorangegangenen Ansprüche, **dadurch gekennzeichnet, daß** zum Entriegeln des Verdeckkastendeckels (7) der im Gehäuse (36) aufgenommene Mitnehmer (35) durch die Antriebseinrichtung (18) in Fahrtrichtung (E) bewegt wird, wobei sich der Kulissenzapfen (40) im ersten parallel zum Mitnehmer (35) ausgerichteten Bahnabschnitt (46) verschiebt und daß gleichzeitig der Schlitten (50) von seiner hinteren Endstellung über den in die Quernut (56) des Mitnehmers (35) eingreifenden Riegelstein (54) bis zu seiner vorderen Endstellung bewegt wird, wodurch über die Schubstangen (51) ein Freischwenken des Verriegelungshakens (21) erfolgt.

11. Verdeckkastendeckel nach einem oder mehreren der vorangegangenen Ansprüche, **dadurch gekennzeichnet, daß** der Riegelstein (54) bei Erreichen der vorderen Endstellung des Schlittens (50) durch sein Gewicht in die zweite untere Quernut (57) des Gehäuses (36) herabfällt, wodurch einerseits die Schubstange (51) mit den Verriegelungshaken (21) in ihrer Freigabestellung (G) arretiert ist und andererseits eine Entkopplung von Mitnehmer (35) und Schlitten (50) erfolgt.

12. Verdeckkastendeckel nach einem oder mehreren der vorangegangenen Ansprüche, **dadurch gekennzeichnet, daß** sich beim weiteren Bewegen des Mitnehmers (35) nach vorne in Fahrtrichtung (E) der Kulissenbolzen (40) des Mitnehmers (35) innerhalb der Kulissenführung (41) bewegt und somit eine Verschwenkbewegung des Ausstellhebels (13) bzw. des Verdeckkastendeckels (7) bewirkt.

13. Verdeckkastendeckel nach einem oder mehreren der vorangegangenen Ansprüche, **dadurch gekennzeichnet, daß** die Antriebseinrichtung (18) mit zwei seitlich außenliegenden, in einem vorderen Bereich des Verdeckkastendeckels (7) angeordneten Verriegelungsvorrichtungen (19) in Wirkverbindung steht.

14. Verdeckkastendeckel nach einem oder mehreren der vorangegangenen Ansprüche, **dadurch gekennzeichnet, daß** die Antriebseinrichtung (18) zusätzlich mit einer weiteren, sich im hinteren querverlaufenden Bereich des Verdeckkastendeckels (7) erstreckenden Verriegelungsvorrichtung (19') in Wirkverbindung steht.

15. Verdeckkastendeckel nach einern oder mehreren der vorangegangenen Ansprüche, **dadurch gekennzeichnet, daß** der Verriegelungshaken (21') für die weitere Verriegelungsvorrichtung (19') über einen Bowdenzug (52) mit einer mit der oberen Zahnstange (30') zusammenwirkenden Riegelsteinmechanik (48') in Wirkverbindung steht.

16. Verdeckkastendeckel nach einem oder mehreren der vorangegangenen Ansprüche, **dadurch gekennzeichnet, daß** die Verriegelungshaken (21) der seitlichen Verriegelungsvorrichtungen (19) am aufbauseitigen Lagerbock (11) drehbar gelagert sind, wogegen die querverlaufenden Verriegelungsbolzen (22) einstückig mit den Gelenkbolzen für die vorderen Ausstellhebel (13) der Scharniereinheit (9) ausgebildet sind.

17. Verdeckkastendeckel nach einem oder mehreren der vorangegangenen Ansprüche, **dadurch gekennzeichnet, daß** zur Fixierung des Verdeckkastendeckels (7) in Querrichtung am vorderen Rand des aufbauseitigen Lagerbocks (11) eine nach oben hin offene Aufnahme (61) ausgebildet ist, in die ein nach unten ragender Arm (62) der deckelseitigen Konsole (10) formschlüssig eingreift.

## Claims

1. A lid (7) for a folding-top compartment of a motor vehicle (1) for a receiving space (6) at the rear for accommodating a folded-down top (3), wherein the lid for the folding-top compartment is movable by means of a drive device (18) from a closed position (**C**) into a swung-up open position (**D**) and *vice versa*, and the lid (7) for the folding-top compartment is fixed in the closed position (**C**) by way of at least one releasable locking device (19, 19') on the stationary body, and the drive device (18) for the displacement movement of the lid (7) for the folding-top compartment comprises a mechanical device used to lock and unlock the lid (7) for the folding-top compartment, [and] is operatively connected to at least one of the locking device[s] (19, 19'), wherein to open and close the top (3) first the locking devices (19, 19') of the lid (7) for the folding-top compartment are moved into a release position (**G**) and thereafter the displacement movement of the lid (7) for the folding-top compartment takes place, **characterized in that** the drive device (18) comprises a gear motor (24) arranged on the body and cooperating with at least one displacement device (26) for the lid (7) for the folding-top compartment by means of transmission members (25), and the transmission members (25) are formed by a toothed-rack drive (27) connected to the gear motor (24) and two drive cables (29, 29') guided in guide tubes (28, 28'), wherein the said drive cables (29, 29') connect toothed racks (30, 30') of the toothed-rack drive (27) in a power-transmitting manner to the displacement devices (26) situated laterally on the outside, and each displacement device (26) comprises a housing (36) secured to a bearing stand (11) of a hinge unit (9) on the body and, in the housing (36), comprises a bracket (10) releasably fastened to the underside of the lid (7) for the folding-top compartment and a bearing stand (11) held in position on the stationary body as well as two spaced push-out levers (12, 13) forming a four-joint arrangement together with the bracket (10) and the bearing stand (11), wherein the upper ends of the two push-out levers (12, 13) are attached in a rotatable manner to the bracket (10) and the lower ends are attached in a rotatable manner to the the bearing stand (11).

2. A lid for a folding-top compartment according to one or more of the preceding Claims, **characterized in that** the toothed-rack drive (27) is formed by a housing (31) extending in the transverse direction of the vehicle, a driving pinion (32) mounted in the housing (31), and two toothed racks (30, 30') cooperating with the driving pinion (32), wherein the driving pinion (32) is connected to a driven shaft of the gear motor (24) in a power-transmitting manner.

3. A lid for a folding-top compartment according to one or more of the preceding Claims, **characterized in that** the toothed racks (30, 30') mounted displaceably above or below the driving pinion (32) in the housing (31) are each fixedly connected to one end (33) of the drive cables (29, 29') guided in the guide tubes (28, 28'), and the other ends (34) of the drive cables (29, 29') are each fixedly connected to a longitudinally movable entrainment means (35) of the two displacement devices (26) situated laterally on the outside.

4. A lid for a folding-top compartment according to one or more of the preceding Claims, **characterized in that** the displaceably mounted entrainment means (35) is received in the housing (36), wherein a projecting sliding-block pin (40) of the entrainment means (35) is operatively connected to a sliding-block guide (41) provided on a push-out lever (13) of the hinge unit (9).

5. A lid for a folding-top compartment according to Claim 4, **characterized in that** the sliding-block guide (41) is provided on an integrally formed portion (45) of the rear push-out lever (13) and is formed from two path portions (46, 47) adjoining each other at an angle.

6. A lid for a folding-top compartment according to Claim 1, **characterized in that** the mechanical device (20) between the drive device (18) and the locking device (19, 19') is formed by a locking-block mechanism (48, 48') and a connecting member (49, 49'), wherein the connecting member (49, 49') is connected at one end thereof to the pivotably mounted locking hook (21, 21') and at the other end thereof to a slide (50, 50') of the locking-block mechanism (48, 48').

7. A lid for a folding-top compartment according to Claim 6, **characterized in that** the connecting member (49) is formed by a connecting rod (51).

8. A lid for a folding-top compartment according to Claim 6, **characterized in that** the connecting member (49') is constructed in the form of a Bowden cable (52).

9. A lid for a folding-top compartment according to Claim 6, **characterized in that** the locking-block mechanism (48) comprises a slide (50) arranged below the entrainment means (35) and mounted displaceably in a longitudinal guide (53) of the housing (36), and a vertically displaceable locking block (54) is inserted in an upright through-opening in the slide (50), wherein depending upon the position of the entrainment means (35) a projecting portion of the locking block (54) engages in a transverse groove (56) on the underside of the entrainment means (35) or in a second transverse groove (57) on the base (58) of the longitudinal guide (53).

10. A lid for a folding-top compartment according to one or more of the preceding Claims, **characterized in that** in order to unlock the lid (7) for the folding-top compartment the entrainment means (35) received in the housing (36) is moved in the direction of travel (E) by the drive device (18), wherein the sliding-block pin (40) is displaced in the first path portion (46) orientated parallel to the entrainment means (35), and at the same time the slide (50) is moved from its rear end position by way of the locking block (54) engaging in the transverse groove (56) of the entrainment means (35) as far as its front end position, as a result of which the locking hook (21) pivots freely by way of the connecting rods (51).

11. A lid for a folding-top compartment according to one or more of the preceding Claims, **characterized in that** when the slide (50) reaches the front end position the locking block (54) drops into the second lower transverse groove (57) in the housing (36) under its own weight, as a result of which the connecting rod (51) is locked by the locking hooks (21) in its free release position (**G**) on the one hand and uncoupling from the entrainment means (35) and the slide (50) takes place on the other hand.

12. A lid for a folding-top compartment according to one or more of the preceding Claims, **characterized in that** as the entrainment means (35) moves further forward in the direction of travel (E) the sliding-block pin (40) of the entrainment means (35) moves inside the sliding-block guide (41) and thus produces a pivoting movement of the push-out lever (13) and the lid (7) for the folding-top compartment.

13. A lid for a folding-top compartment according to one or more of the preceding Claims, **characterized in that** the drive device (18) is operatively connected to two locking devices (19) arranged in a front region of the lid (7) for the folding-top compartment and situated laterally on the outside.

14. A lid for a folding-top compartment according to one or more of the preceding Claims, **characterized in that** the drive device (18) is additionally operatively connected to a further locking device (19') extending in the rear transversely extending region of the lid (7) for the folding-top compartment.

15. A lid for a folding-top compartment according to one or more of the preceding Claims, **characterized in that** the locking hook (21') for the further locking device (19') is operatively connected by way of a Bowden cable (52) to a locking-block mechanism (48') cooperating with the upper toothed rack (30').

16. A lid for a folding-top compartment according to one or more of the preceding Claims, **characterized in that** the locking hook (21) of the lateral locking devices (19) are mounted in a rotatable manner on the bearing stand (11) on the body, whereas the transversely extending locking pins (22) are constructed integrally with the joint pins for the front push-out levers (13) of the hinge unit (9).

17. A lid for a folding-top compartment according to one or more of the preceding Claims. **characterized in that** in order to fix the lid (7) for the folding-top compartment in the transverse direction a receiving means (61), which is open at the top and into which a downwardly projecting arm (62) of the bracket (10) on the lid engages with positive locking, is formed on the front edge of the bearing stand (11) on the body.

## Revendications

1. Couvercle de coffre de capote (7) d'un véhicule automobile (1) pour un logement (6) arrière destiné à recevoir une capote (3) repliée, le couvercle du coffre de capote étant déplaçable, au moyen d'un dispositif d'entraînement (18), d'une position fermée (C) à une position ouverte (D) pivotée vers le haut, et inversement, et le couvercle (7) du coffre de capote en position fermée (C) étant fixé à la carrosserie fixe, par au moins un dispositif de verrouillage (19, 19') non permanent, et le dispositif d'entraînement (18) pour le mouvement de déplacement du couvercle (7) du coffre de capote étant constitué d'un dispositif mécanique qui sert au verrouillage ou déverrouillage du couvercle (7) et qui est en liaison active avec au moins l'un des dispositifs de verrouillage (19, 19'), pour l'ouverture et la fermeture de la capote (3), les dispositifs de verrouillage (19, 19') du couvercle (7) du coffre de capote étant d'abord déplacés chacun dans une position de déverrouillage (G) et le mouvement de déplacement du couvercle (7) ayant lieu ensuite, **caractérisé en ce que** le dispositif d'entraînement (18) comprend un motoréducteur (24) disposé côté carrosserie, qui coopère, au moyen d'éléments de transmission (25), avec au moins un dispositif de déplacement (26) du couvercle (7), et les éléments de transmission (25) étant constitués par un mécanisme à crémaillère (27) relié au motoréducteur (24) et par deux câbles d'entraînement (29, 29') guidés dans des tubes de guidage (28, 28'), ces câbles d'entraînement (29, 29') reliant, en transmettant les efforts, des crémaillères (30, 30') du mécanisme à crémaillères (27) aux dispositifs de déplacement (26) disposés à l'extérieur sur les côtés, et chaque dispositif de déplacement (26) comprenant un boîtier (36) fixé à un support (11) côté carrosserie d'une unité à charnière (9), et le boîtier (36) comprenant un console (10) fixée de manière non permanente à la face inférieure du couvercle (7) du coffre de capote, ainsi qu'un support (11) immobilisé sur la carrosserie fixe et deux leviers de déploiement (12, 13) disposés espacés, qui forment avec la console (10) et le support (11) un quadrilatère articulé, les extrémités supérieures des deux leviers de déploiement (12, 13) étant attachées à la console (10) de manière à pouvoir tourner, et les extrémités inférieures étant attachées au support (11) de manière à pouvoir tourner.

2. Couvercle de coffre de capote selon une ou plusieurs des revendications précédentes, **caractérisé en ce que** le mécanisme à crémaillère (27) se compose d'un boîtier (31) qui s'étend dans la direction transversale du véhicule, d'un pignon d'entraînement (32) monté dans le boîtier (31) et de deux crémaillères (30, 30') qui coopèrent avec le pignon d'entraînement (32), le pignon d'entraînement (32) étant relié, en transmettant les efforts, à un arbre de sortie du motoréducteur (24).

3. Couvercle de coffre de capote selon une ou plusieurs des revendications précédentes, **caractérisé en ce que** les crémaillères (30, 30') montées coulissantes au-dessus ou au-dessous du pignon d'entraînement (32) dans le boîtier (31), sont reliées fixement chacune à une extrémité (33) des câbles d'entraînement (29, 29') guidés dans les tubes de guidage (28, 28') et en ce que les autres extrémités (34) des câbles d'entraînement (29, 29') sont reliées fixement chacune à un entraîneur (35) déplaçable longitudinalement des deux dispositifs de déplacement (26) disposés sur les côtés extérieurs.

4. Couvercle de coffre de capote selon une ou plusieurs des revendications précédentes, **caractérisé en ce que** dans le boîtier (36) est logé l'entraîneur (35) monté coulissant, un doigt de coulisse (40) dépassant de l'entraîneur (35) étant en liaison active avec un guide de coulisse (41) prévu sur un levier de déploiement (13) de l'unité de charnière (9).

5. Couvercle de coffre de capote selon la revendication 4, **caractérisé en ce que** le guide de coulisse (41) est prévu sur un bossage (45) du levier de déploiement arrière (13) et se compose de deux portions de voie (46, 47) juxtaposées en angle.

6. Couvercle de coffre de capote selon la revendication 1, **caractérisé en ce que** le dispositif mécanique (20) entre le dispositif d'entraînement (18) et le dispositif de verrouillage (19, 19') est constitué par un mécanisme à verrou (48, 48') et un élément de liaison (49, 49'), l'élément de liaison (49, 49') étant relié par l'une de ses extrémités au crochet de verrouillage (21, 21') monté pivotant et, par son autre extrémité, à un coulisseau (50, 50') du mécanisme à verrou (48, 48').

7. Couvercle de coffre de capote selon la revendication 6, **caractérisé en ce que** l'élément de liaison (49) est formé par une bielle (51).

8. Couvercle de coffre de capote selon la revendication 6, **caractérisé en ce que** l'élément de liaison (49') est conformé en câble Bowden (52).

9. Couvercle de coffre de capote selon la revendication 6, **caractérisé en ce que** le mécanisme à verrou (48) comprend un coulisseau (50) disposé au-dessous de l'entraîneur (35) et qui est monté de manière à pouvoir coulisser dans un guide longitudinal (53) du boîtier (36) et en ce que dans une ouverture de passage verticale du coulisseau (50) est inséré un verrou (54) qui peut coulisser dans la direction de la hauteur, une portion dépassante du verrou (54) s'engageant dans une rainure transversale (56) de la face inférieure de l'entraîneur (35) ou dans une deuxième rainure transversale (57) du fond (58) du guide longitudinal (53), suivant la position de l'entraîneur (35).

10. Couvercle de coffre de capote selon une ou plusieurs des revendications précédentes, **caractérisé en ce que** pour déverrouiller le couvercle (7), l'entraîneur (35) logé dans le boîtier (36) est déplacé par le dispositif d'entraînement (18) dans le sens de marche (E), le doigt de coulisse (40) coulissant dans la première portion de voie (46), orientée parallèlement à l'entraîneur (35), et en ce qu'en même temps, le coulisseau (50) est déplacé depuis sa position de fin de course arrière, par l'intermédiaire du verrou (54) qui s'engage dans la rainure transversale (56) de l'entraîneur (35), jusqu'à sa position de fin de course avant, un pivotement libre du crochet de verrouillage (21) s'effectuant sous l'effet des bielles (51).

11. Couvercle de coffre de capote selon une ou plusieurs des revendications précédentes, **caractérisé en ce que** lorsqu'est atteinte la position de fin de course avant du coulisseau (50), le verrou (54) tombe sous l'effet de son poids, dans la deuxième rainure transversale inférieure (57) du boîtier (36), ce qui fait que d'une part la bielle (51) est bloquée avec les crochets de verrouillage (21) dans sa position de déverrouillage (G) et que d'autre part, il se produit un désaccouplement de l'entraîneur (35) et du coulisseau (50).

12. Couvercle de coffre de capote selon une ou plusieurs des revendications précédentes, **caractérisé en ce que** lorsque l'entraîneur (35) continue de se déplacer vers l'avant dans le sens de marche (E), le doigt de coulisse (40) de l'entraîneur (35) se déplace à l'intérieur du guide de coulisse (41) et provoque ainsi un mouvement de pivotement du levier de déploiement (13) ou du couvercle (7) du coffre de capote.

13. Couvercle de coffre de capote selon une ou plusieurs des revendications précédentes, **caractérisé en ce que** le dispositif d'entraînement (18) est en liaison active avec deux dispositifs de verrouillage (19) disposés sur les côtés extérieurs, dans une zone avant du couvercle (7) du coffre de capote.

14. Couvercle de coffre de capote selon une ou plusieurs des revendications précédentes, **caractérisé en ce que** le dispositif d'entraînement (18) est en liaison active en plus avec un autre dispositif de verrouillage (19') qui s'étend dans la zone transversale arrière du couvercle (7) du coffre de capote.

15. Couvercle de coffre de capote selon une ou plusieurs des revendications précédentes, **caractérisé en ce que** le crochet de verrouillage (21') pour l'autre dispositif de verrouillage (19') est en liaison active, par l'intermédiaire d'un câble Bowden (52), avec un mécanisme à verrou (48') qui coopère avec la crémaillère supérieure (30').

16. Couvercle de coffre de capote selon une ou plusieurs des revendications précédentes, **caractérisé en ce que** les crochets de verrouillage (21) des dispositifs de verrouillage (19) latéraux sont montés tournés sur le support (11) côté carrosserie, tandis que les doigts de verrouillage (22) sont réalisés d'une seule pièce avec les axes d'articulation des leviers de déploiement avant (13) de l'unité à charnière (9).

17. Couvercle de coffre de capote selon une ou plusieurs des revendications précédentes, **caractérisé en ce que** pour fixer le couvercle (7) dans la direction transversale, sur le bord avant du support (1) côté carrosserie, il est réalisé un logement (61) ouvert vers le haut dans lequel s'engage, par complémentarité de forme, un bras (62) dépassant vers le bas de la console (10) côté couvercle.
